# EUROPEAN PATENT SPECIFICATION

(11) **EP 1 896 298 B1**
(45) Date of publication and mention of the grant of the patent: **24.06.2009**
(21) Application number: 05763942.9
(22) Date of filing: 24.06.2005
(51) Int. Cl.: B60R 21/16

(54) **AIRBAG WITH A CLOSABLE VENTING DEVICE**
AIRBAG MIT EINER VERSCHLIESSBAREN LÜFTUNGSVORRICHTUNG
AIRBAG AVEC UN DISPOSITIF DE VENTILATION REFERMABLE

(43) Date of publication of application: 12.03.2008
(73) Proprietor: Dalphi Metal España, S.A., 28006 Madrid (ES)
(72) Inventor: PEREZ GARCIA, AZUCENA, E 36213 Vigo (Pontevedra) (ES)
(74) Representative: Elzaburu Marquez, Alberto
(86) International application number: PCT/EP2005/052972
(87) International publication number: WO 2006/136206

(56) References cited:
- US-A- 3 820 814

## Description

### FIELD OF THE INVENTION

The present invention refers to a venting device for airbags used in automobiles to cushion the blows suffered by drivers and passengers in the event of crashes or collisions.

### BACKGROUND OF THE INVENTION

Airbags basically consist in a folded bag which inflates rapidly by means of a gas produced by a generator when certain sensing devices detect a collision of the vehicle. The bag is thus deployed in front of the driver or passenger, depending on its location, and prevents their bodies from hitting against any part of the vehicle.
In normal bag deployment, the inner pressure produced by the generator when filling it with gas can be high enough as to cause the bag to be so hard that the occupant bounces off it. To prevent this drawback they have been provided with a venting opening in order to reduce the inner pressure of the bag and consequently the possibility of causing injuries when activated.
The use of several means for closing this venting opening in order to achieve better control of the inner pressure in the bag than that provided by only changing the size thereof is also known. In this sense the use of patches to prevent the gas from immediately exiting through the discharge opening except when the patch is broken when a certain pressure inside the bag is reached can be mentioned. The art has proposed different types of patches with different means for controlling breaking according to, in a greater or lesser degree, a certain resistance to the gas pressure inside the bag. Thus the presence of the necessary pressure for the bag to perform its protective function is made compatible with the assurance that the gas pressure will not reach an excessive value with a risk for the people for whom the bag deploys.

On the other hand, the need has also arisen for venting devices allowing to increase the gas outflow according to the specific characteristics of each collision and the type of passenger affected, and in this sense several venting device solutions are known, providing adjustable surface venting openings, facilitating an increase in the venting area as the pressure inside the bag increases.
A new need that has arisen also poses the need for airbags that allow reducing the venting area, even completely eliminating it in certain conditions of the impact, which requires closing mechanisms which must operate in a manner opposite that of the art known to date. The aforementioned traditional patches had to completely cover the outlet opening until the inner pressure of the gas in the bag reached a certain level and then broke, not operating anymore. Now the opposite is required: devices allowing closing the venting opening when it is already open when the inner pressure of the bag reaches certain levels.
Some proposals are known to this respect such as those disclosed in Spanish patent ES 2182629, in US patent 6,139,048 and in US patent application 2004/0090054 which use shifting elements to close the venting opening making use of the stresses produced in the bag due to the pressure difference combined with the occupant load difference. The present invention proposes a solution to the problem based on different principles.

### SUMMARY OF THE INVENTION

The object of the present invention is to achieve an airbag with a closable venting device which for very severe collisions allows partial or total closure of the venting opening after a first phase in which it is open discharging gas. Such an airbag is known from US 3 820 814 A which corresponds to the preamble of claim 1. This object is achieved by means of a venting device defined at its upper portion by an area of the bag surrounding the venting opening and at its lower portion by a part joined by its contour to the inside of said area, having in its central portion, opposite the venting opening, a closing element and including a plurality of openings, said area and said part being separated by a separating element made from a resilient material and configured such that a chamber is formed between them which receives the gas from the bag through the openings located in said part and discharges it through the opening of the bag, being able the venting device to partially or completely reduce the gas outflow by means of partially or completely closing the gas outlet pathways towards the opening of the bag occurring when the closing element is deformed or broken when pressure inside the bag exceeds predetermined limits, where the closing element is configured so that when the internal pressure in the bag reaches a predetermined level, a part of it is broken forming a tab that can close the venting opening.
An advantage of the present invention is that the operation of the venting device depends solely on the inner pressure of the bag, which is very interesting due to the possibilities of controlling this variable. The final product is stronger since it does not depend on other characteristics such as stresses/deformations.
Another advantage of the present invention is that the inner pressure of the bag is more stable as a venting device operation control parameter than other parameters depending on factors such as the manner in which the bag deploys or the location of the occupant with respect to the bag.
Another advantage of the present invention is that it facilitates both total closing of the venting opening of the bag and partial closing for those cases of intermediate severity between the conditions of maximum and minimum collision severity.
Other features and advantages of the present invention will be inferred from the following detailed description of an illustrative and by no means limiting embodiment of its object based on the attached drawings.

### DESCRIPTION OF THE DRAWINGS

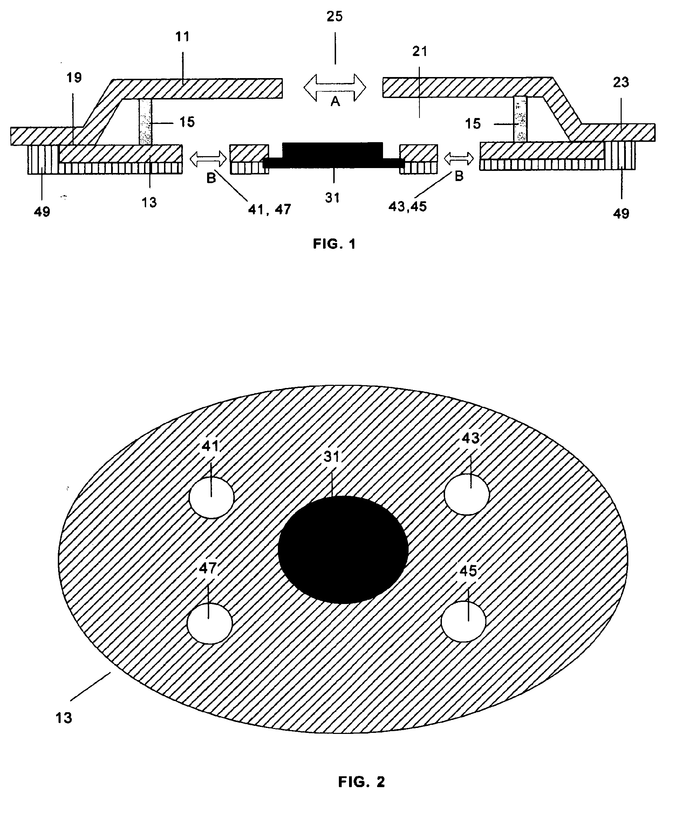

Figure 1 is a schematic elevational view of the venting device according to the present invention.
Figure 2 is a schematic plan view of the lower part of the venting device according to the present invention.
Figure 3 is a schematic elevational view of the venting device according to the present invention in the state corresponding to a low severity collision.
Figure 4 is a schematic elevational view of the venting device according to the present invention in the state corresponding to a medium severity collision.
Figure 5 is a schematic elevational view of the venting device according in the state corresponding to a high severity collision, showing a cylindrical deformation of the closing element.
Figures 6 and 7 are similar views to Figure 5 showing closing elements with tronco-conical and spherical deformations, respectively.
Figure 8 is a schematic elevational view of the venting device according to the present invention in the state corresponding to a high severity collision, using a breakable closing element.

### DETAILED DESCRIPTION OF THE INVENTION

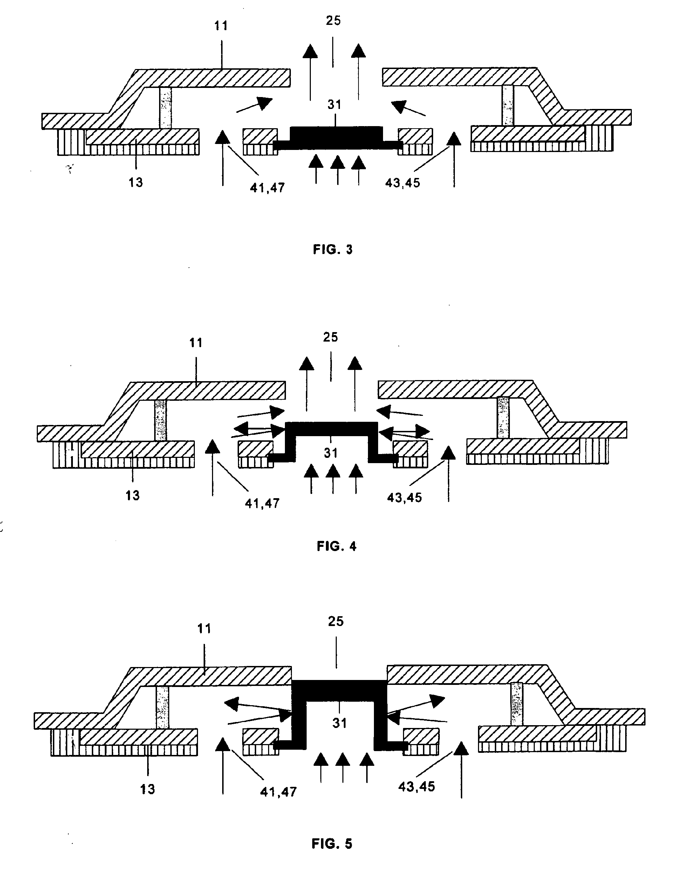

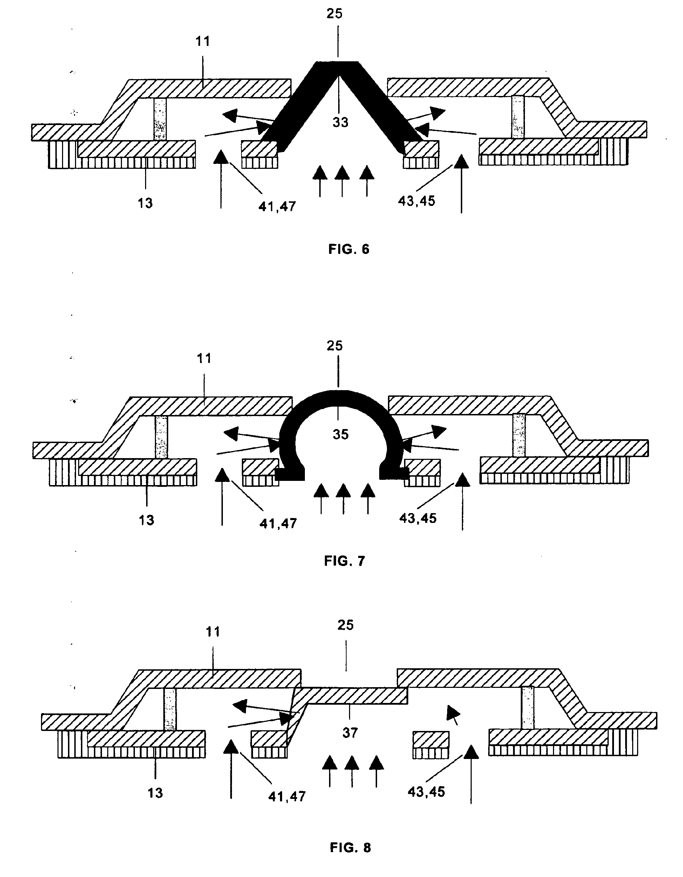

The venting device of the airbag according to a preferred embodiment of the present invention is formed by an upper area 11 and a lower part 13 separated by a separating element 15 defining a chamber 21. In a preferred configuration the separating element 15 is a circular annulus.
The upper area 11 is formed by a portion of the bag 23 of the airbag inside which the venting opening 25 of area A is located.
Area A must be gauged in order to achieve sufficient gas discharge in general airbag operating conditions, since the closing device will only operate in exceptional cases and must therefore be greater than or equal to the area V required for the bag to operate correctly in conditions of less severe collisions.
The lower part 13, preferably made with the same material as the bag, although a material less resilient could also be used, has in its central portion, opposite the venting opening 25, a closing element 31 made from a resilient material, preferably silicone, and includes a plurality of openings 41, 43, 45, 47 of area B, gauged so as to discharge the amount of gas required in conditions of less severe collisions.
Part 13 is joined to the bag 23 along its contour 19 by means of a layer 49 of adhesive material. It may be alternatively joined by sewing, ultrasounds or any other production process. For its part, the closing element 31 is joined by means of an adhesive or any other suitable means to part 13 along the contour of the opening provided for that purpose in its central portion
In conditions of less severe collisions there will be a certain inner pressure P1 inside the bag determining the ventilation area V required for suitably restraining the occupant. Therefore, the sum of the areas B of the openings 41, 43, 45, 47 must be equivalent to area V. In Figure 3 it can be observed that, in this case, the gas enters the chamber 21 through the openings 41, 43, 45 and 47 and exits through the venting opening 25 following the direction indicated by the arrows. The inner pressure P1 of the bag is not enough to deform the closing element 31 which remains, so to speak, in its rest position.
In conditions of intermediate severity there will be greater inner pressure, called P2, inside the bag than in the previous cases, and consequently less amount of gas must be discharged, which is achieved by means of the partial closing of the gas outlet pathways occurring with the partial deformation of the closing element 31 due to P2, as can be seen in Figure 4.
In conditions of more severe collisions a greater inner pressure, called P3, occurs inside the bag than in the previous cases, deforming the closing element completely and covering the venting opening 25, preventing the air from exiting the bag, as can be seen in Figure 5.
It must be mentioned that the function of the separating element 15 is that of creating the chamber 21 allowing the closing element 31 to have enough room to be deformed in the mentioned manner, and that it must be made in a resilient material so that it does not make the bag rigid in the area occupied by the venting device, allowing the bag to be folded. On the other hand, said material must be stable in the operating and temperature conditions required for airbags. They will be preferably made of silicone.
The closing element may be constituted by a sheet having different widths in different areas of the sheet. Depending on its size, the shape of the sheet deformation can be different. While the closing element 31 is configured for having a cylindrical deformation, closing elements 33 and 35 are configured for having, respectively, a tronco-conical and a spherical deformation.
In accordance with the deformation shape of the closing element under the bag internal pressure, the venting opening 25 and the needed separation in chamber 21 will be sized for obtaining the maximum closure.
In the invention a closing element 37 is configured so that, when the internal pressure in the bag reaches a predetermined level (P3), a part of it is broken forming a tab that closes the venting opening 25 as it is shown in Fig. 8.

## Claims

1. An airbag the inflatable bag (23) of which has a gas venting opening (25), comprising a venting device defined in its upper area by an area (11) of the bag (23) surrounding said opening (25), and in its lower portion by a part (13), joined at its contour (19) to the inside of said area (11), having a closing element (37) in its central part opposite the venting opening (25) and including a plurality of openings (41, 43, 45, 47), said area (11) and said part (13) being separated by a separating element (15) made from a resilient material and configured so that a chamber (21) is formed between them which receives the gas of the bag through the openings (41, 43, 45, 47) of the part (13) and discharges it through the venting opening (25), it being possible to partially or totally reduce the gas outflow by means of partially or totally closing the gas outlet pathways towards the venting opening (25) occurring by deforming of the closing element and totally closing the venting opening (25) after the breaking of the closing element (37), when the inner pressure of the bag (23) exceeds predetermined limits (P2, P3) **characterized in that** the closing element (37) is configured so that, when the internal pressure in the bag reaches a predetermined level (P3), a part of it is broken forming a tab that can close the venting opening (25).

2. An airbag according to claim 1, **characterised in that** said closing element (31, 33, 35) is made from a resilient material.

3. An airbag according to claim 1, **characterised in that** said closing element (31, 33, 35) is made from silicone.

4. An airbag according to claim 2, **characterised in that** the closing element (31) is configured for having a cylindrical deformation.

5. An airbag according to claim 2, **characterised in that** the closing element (33) is configured for having a tronco-conical deformation.

6. An airbag according to claim 2, **characterised in that** the closing element (35) is configured for having a spherical deformation.

7. An airbag according to claim 1, **characterised in that** the part (13) is made from the same material as the bag (23).

8. An airbag according to claim 1, **characterised in that** the part (13) is made from a material less resilient than the bag (23).

9. An airbag according to claim 1, **characterised in that** the separating element (15) is made from silicone.

10. An airbag according to claim 10, **characterised in that** the separating element (15) is a circular annulus.

11. An airbag according to claim 1, **characterised in that** the part (13) is joined to the bag by means of a layer of adhesive element (49).

12. An airbag according to claim 1, **characterised in that** the part (13) is joined to the bag by sewing means.

13. An airbag according to claim 1, **characterised in that** the surface of the opening (25) of the bag is greater than or equal to the sum of the surface of the openings (41, 43, 45, 47) of the part (13).

## Patentansprüche

1. Airbag, dessen aufblasbarer Sack (23) eine Entgasungsöffnung (25) aufweist, mit einer Lüftungsvorrichtung, die in ihrem oberen Bereich durch einen die Öffnung (25) umgebenden Bereich (11) des Sacks (23) gebildet ist und in ihrem unteren Bereich durch einen Teil (13) gebildet ist, der an seiner Kontur (19) mit dem Inneren des besagten Bereichs (11) verbunden ist, wobei die Lüftungsvorrichtung in ihrem der Entgasungsöffnung (25) gegenüberliegenden zentralen Bereich ein Verschlusselement (37) aufweist und mit mehreren Öffnungen (41,43, 45,47) versehen ist, wobei der besagte Bereich (11) und der besagte Teil (13) durch ein Trennelement (15) getrennt sind, das aus einem elastischen Material besteht und derart konfiguriert ist, dass zwischen dem Bereich und dem Teil eine Kammer (21) gebildet ist, die das Gas des Sacks durch die Öffnungen (41,43,45,47) des Teils (13) aufnimmt und das Gas durch die Entgasungsöffnung (25) auslässt, wobei das Ausströmen des Gases teilweise oder vollständig reduziert werden kann, indem die Entgasungswege zu der Entgasungsöffnung (25) teilweise oder vollständig geschlossen werden, was durch Verformen des Verschlusselements und vollständiges Schließen der Entgasungsöffnung (25) nach dem Brechen des Verschlusselements (37) erzielt wird, wenn der Innendruck des Sacks (23) vorbestimmte Grenzwerte (P2, P3) überschreitet,
**dadurch gekennzeichnet, dass** das Verschlusselement (37) derart konfiguriert ist, dass, wenn der Innendruck in dem Sack ein vorbestimmtes Niveau (P3) erreicht, ein Teil des Verschlusselements bricht und eine Klappe bildet, welche die Entgasungsöffnung (25) schließen kann.

2. Airbag nach Anspruch 1, **dadurch gekennzeichnet, dass** das Verschlusselement (31,33,35) aus einem elastischen Material besteht.

3. Airbag nach Anspruch 1, **dadurch gekennzeichnet, dass** das Verschlusselement (31,33,35) aus Silicon besteht.

4. Airbag nach Anspruch 2, **dadurch gekennzeichnet, dass** das Verschlusselement (31) derart konfiguriert ist, dass es zylindrisch verformt wird.

5. Airbag nach Anspruch 2, **dadurch gekennzeichnet, dass** das Verschlusselement (33) derart konfiguriert ist, dass es kegelstumpfförmig verformt wird.

6. Airbag nach Anspruch 2, **dadurch gekennzeichnet, dass** das Verschlusselement (35) derart konfiguriert ist, dass es sphärisch verformt wird.

7. Airbag nach Anspruch 1, **dadurch gekennzeichnet, dass** der besagte Teil (13) aus dem gleichen Material wie der Sack (23) hergestellt ist.

8. Airbag nach Anspruch 1, **dadurch gekennzeichnet, dass** der Teil (13) aus einem weniger elastischen Material als der Sack (23) hergestellt ist.

9. Airbag nach Anspruch 1, **dadurch gekennzeichnet, dass** das Trennelement (15) aus Silicon besteht.

10. Airbag nach Anspruch 10, **dadurch gekennzeichnet, dass** das Trennelement (15) ein Kreisring ist.

11. Airbag nach Anspruch 1, **dadurch gekennzeichnet, dass** der Teil (13) durch eine Haftelementschicht (49) mit dem Sack verbunden ist.

12. Airbag nach Anspruch 1, **dadurch gekennzeichnet, dass** der Teil (13) durch Vernähung mit dem Sack verbunden ist.

13. Airbag nach Anspruch 1, **dadurch gekennzeichnet, dass** die Oberfläche der Öffnung (25) des Sacks größer als die Summe der Oberfläche der Öffnungen (41,43,45,47) des Teils (13) oder gleich dieser Summe ist.

## Revendications

1. Airbag dont le coussin gonflable (23) comporte une ouverture d'évacuation de gaz (25), comprenant un dispositif d'évacuation défini dans sa région supérieure par une région (11) du coussin (23) qui entoure ladite ouverture (25), et dans sa partie inférieure par une partie (13), reliée au niveau de son contour (19) à l'intérieur de ladite région (11), comportant un élément de fermeture (37) dans sa partie centrale en face de l'ouverture d'évacuation (25) et comprenant une pluralité d'orifices (41, 43, 45, 47), ladite région (11) et ladite partie (13) étant séparées par un élément de séparation (15) fait d'un matériau résilient et conçu de telle sorte qu'une chambre (21) est formée entre elles et reçoit le gaz du coussin à travers les orifices (41, 43, 45, 47) de la partie (13) et le décharge par l'ouverture d'évacuation (25), de sorte qu'il est possible de réduire partiellement ou totalement l'écoulement de gaz au moyen de la fermeture partielle ou totale des voies de sortie de gaz en direction de l'ouverture d'évacuation (25) se produisant sous l'effet de la déformation de l'élément de fermeture et de la fermeture totale de l'ouverture d'évacuation (25) après la rupture de l'élément de fermeture (37), lorsque la pression interne du coussin (23) dépasse des limites prédéterminées (P2, P3), **caractérisé en ce que** l'élément de fermeture (37) est conçu de telle sorte que, lorsque la pression interne dans le coussin atteint un niveau prédéterminé (P3), une partie de celui-ci se déchire en formant une patte qui peut fermer l'ouverture d'évacuation (25).

2. Airbag selon la revendication 1, **caractérisé en ce que** ledit élément de fermeture (31, 33, 35) est fait d'un matériau résilient.

3. Airbag selon la revendication 1, **caractérisé en ce que** ledit élément de fermeture (31, 33, 35) est en silicone.

4. Airbag selon la revendication 2, **caractérisé en ce que** ledit élément de fermeture (31) est conçu pour présenter une déformation cylindrique.

5. Airbag selon la revendication 2, **caractérisé en ce que** ledit élément de fermeture (33) est conçu pour présenter une déformation tronconique.

6. Airbag selon la revendication 2, **caractérisé en ce que** ledit élément de fermeture (35) est conçu pour présenter une déformation sphérique.

7. Airbag selon la revendication 1, **caractérisé en ce que** la partie (13) est faite du même matériau que le coussin (23).

8. Airbag selon la revendication 1, **caractérisé en ce que** la partie (13) est faite d'un matériau moins résilient que le coussin (23).

9. Airbag selon la revendication 1, **caractérisé en ce que** l'élément de séparation (15) est en silicone.

10. Airbag selon la revendication 1, **caractérisé en ce que** l'élément de séparation (15) est un anneau de cercle.

11. Airbag selon la revendication 1, **caractérisé en ce que** la partie (13) est reliée au coussin par une couche d'élément adhésif (49).

12. Airbag selon la revendication 1, **caractérisé en ce que** la partie (13) est reliée au coussin au moyen de coutures.

13. Airbag selon la revendication 1, **caractérisé en ce que** la surface de l'ouverture (25) du coussin est supérieure ou égale à la somme de la surface des orifices (41, 43, 45, 47) de la partie (13).
